# EUROPEAN PATENT APPLICATION

(11) **EP 4 847 879 A1**
(43) Date of publication of application: **02.12.2026**
(21) Application number: 25382525.1
(22) Date of filing: 26.05.2025
(51) Int. Cl.: G01B 11/30, G01B 11/24

(54) **SCATTERING CORRECTION FOR METROLOGY OF REFLECTIVE SURFACES**

(71) Applicant: Wooptix S.L., 28006 Madrid (ES)
(72) Inventor: Trujillo Sevilla, Juan Manuel, 28006 Madrid (ES)
(74) Representative: Grünecker Patent- und Rechtsanwälte PartG mbB

(57) **Abstract**

The invention relates to an optical apparatus (100) for probing a reflective sample (103), comprising: at least one light emitting source (101) configured for illuminating the sample (103); at least one image sensor (102) configured to capture images of the illuminated sample (103); at least one light modification element (104) arranged between the sample (103) and the at least one image sensor (102), wherein said at least one light modification element (104) is configured for removing or attenuating at least part of any non-specular components of the light reflected from a surface (103a) of the illuminated sample (103); wherein the apparatus (100) is configured for capturing, with the at least one image sensor (102), at least two images of the sample at different optical distances along the optical axis (105) of the apparatus (100); and wherein the apparatus (100) is configured for reconstructing at least one two-dimensional wavefront phase of the light reflected by the surface (103a) of the sample (103) and that has passed through said at least one light modification element (104) from the captured at least two images; and wherein the apparatus (104) is further configured for extracting information on at least one characteristic of the sample (103) from the reconstructed at least one two-dimensional wavefront phase.

## Description

### Background

This invention relates to an optical apparatus for probing a reflective sample and to a method for probing a reflective sample with said optical apparatus.

In industrial manufacturing, as well as in research or medical applications and processes, it is often important to measure one or more spatial characteristics of a reflective sample with high accuracy, for example, as part of a quality inspection process.

A common technique for probing spatial characteristics of a reflective sample, such as a semiconductor wafer, is the use of laser interferometry.

A drawback of current optical metrology systems, particularly those based on laser interferometry techniques, is that they are relatively slow and intricate, and that they are complicated to set up, operate, and maintain.

Furthermore, current laser interferometry metrology techniques suffer from poor resolution and laser speckle noise and are very sensitive to external perturbations, such as temperature variations or vibrations that may occur in the environment of the metrology system.

### Problem

It is therefore the objective of the present disclosure to provide improved means for probing the spatial characteristics of reflective samples. In particular, it is an aim of the present disclosure to simplify and to speed up the measuring of spatial characteristics of reflective samples with high resolution and to increase the precision with which spatial characteristics of reflective samples can be measured. It is further an aim of the present disclosure to provide an optical apparatus for probing the spatial characteristics of reflective samples that is robust, easy to set up, operate and to maintain.

### Solution

This objective is achieved by the subject-matter of the independent claims.

Advantageous embodiments and further developments are the subject-matter of the dependent claims.

An exemplary optical apparatus for probing a reflective sample can comprise one, some or all of the following components:
- at least one light emitting source configured for illuminating the sample;
- at least one image sensor configured to capture images of the illuminated sample, wherein said at least one image sensor can be a two-dimensional charge-coupled device (CCD) sensor, e.g. a two-dimensional camera;
- at least one light modification element arranged between the sample and the at least one image sensor, wherein said at least one light modification element is configured for removing or attenuating at least part of the/any non-specular components of the light reflected from a surface of the illuminated sample. Stated differently, the at least one light modification element can be configured to allow only specular components of the light reflected from the surface of the illuminated sample to pass through or can be configured to mainly let specular components of the light reflected from the surface of the illuminated sample to pass through.

The exemplary optical apparatus has an optical axis. For example, said optical axis can be parallel to or aligned with a line connecting the at least one image sensor and the reflective sample.

The exemplary optical apparatus can be configured for capturing, with the at least one image sensor, at least two images of the sample at different optical distances along the optical axis of the optical apparatus.

The exemplary optical apparatus can further be configured for reconstructing at least one two-dimensional wavefront phase of the light reflected by the surface of the sample and that has passed through said at least one light modification element from the captured at least two images.

Hence, at least one two-dimensional wavefront phase can be reconstructed for each of the captured at least two images. Stated differently, the exemplary optical apparatus can be configured for performing wavefront phase imaging based on said at least two images of the sample captured at different optical distances along the optical axis of the apparatus.

It is noted that herein the propagation of wavefronts, i.e. electromagnetic wavefronts, or photons is assumed to follow the laws of geometrical optics. For example, it is assumed that the direction of light propagation is perpendicular to the wavefront and that Snell's law applies.

For completeness, it is noted that a wavefront can be defined by the set of points of a wave having the same phase, i.e. the wavefront or wavefront shape can be described by a phase map, e.g. by a two-dimensional phase map.

The exemplary optical apparatus can further be configured for extracting information on at least one characteristic of the sample from the reconstructed at least one two-dimensional wavefront phase.

Herein a sample to be probed may be a semiconductor sample, e.g. a semiconductor wafer, in particular a silicon wafer. However, other reflective sample types such as mirrors or flat panel displays can be probed as well.

The above and herein exemplary described optical apparatus significantly reduces the negative impact of scattered light from the illuminated surface of the sample, since such scattered light can substantially degrade the accuracy with which the surface topology of the reflective sample can be probed.

By removing or attenuating at least part of any non-specular components of the light reflected from a surface of the illuminated sample with the at least one light modification element of the above and herein exemplary described optical apparatus, and thereby removing or attenuating unwanted scattered light, the accuracy with which the surface topology of the reflective sample can be probed can be significantly improved compared to current techniques. Herein non-specular components of the light reflected from a surface of the illuminated sample can refer to all parts of reflected or scattered light that do not follow the ideal law of reflection. In other words, these are components of light that deviate from the specular, mirror-like ideal reflection path due to surface irregularities, roughness, or scattering phenomena within or at the surface of the illuminated sample.

The exemplary apparatus may further comprise an exemplary computing system or be in communication with an external computing system.

Said exemplary computing system(s), may comprise one or more processors, such as common computer processor units (CPUs) or common graphical processor units (GPUs), and a computer memory, and may be configured for carrying out computations for reconstructing at least one two-dimensional wavefront phase of the light reflected by the surface of the sample and that has passed through said at least one light modification element from the captured at least two images.

For reconstructing at least one two-dimensional wavefront phase of the light reflected by the surface of the sample and that has passed through said at least one light modification element from the captured at least two images, it is sufficient to capture two images of the sample at different optical distances along the optical axis of the apparatus.

For example, from capturing or measuring the intensity distribution of the images taken at different optical distances along the optical axis of the apparatus, the two-dimensional wavefront phase of the light reflected by the surface of the sample can be derived.

The image acquired at a plane having an optical distance that is closer to the light emitting source, is commonly referred to as image taken in the intra-plane, and the image acquired at a plane having an optical distance that is further to the light emitting source is commonly referred to image taken in the extra plane.

From the intensity distribution of said images, the two-dimensional wavefront phase in a plane, e.g. the midway plane, between said two optical planes, i.e. between the intra-plane and the extra-plane, can be derived, as inter alia exemplary described in EP 3 358 321 B1 (cf. [0011], [0078] to [0092], Fig.1), which is incorporated in its entirety to this disclosure by reference.

However, other wavefront phase imaging techniques can also be used to reconstruct the wavefront phase of the light reflected by the surface of the sample from said two images of the sample captured at different optical distances along the optical axis of the apparatus.

Said exemplary computing system(s) may further be configured for extracting information on at least one characteristic of the sample from the reconstructed at least one two-dimensional wavefront phase.

The extracted information on at least one characteristic of the sample from the reconstructed at least one two-dimensional wavefront phase can comprise information on at least one of the following characteristics of the sample: size or geometry or shape of sample, size or geometry or shape of surface features of the sample, surface height variations of the sample, e.g. total thickness variation or local thickness variation of the sample surface or warpage of the sample surface.

Herein thickness variations can be understood as height variations of the topology of the sample surface.

From the reconstructed at least one two-dimensional wavefront phase, the information on the at least one characteristic of the sample such as warpage, e.g. maximum warpage or total thickness variation or local thickness variation of the sample surface can, for example, be extracted using the following relationship between the reconstructed two-dimensional wavefront phase *ϕ*(*x, y*) and the surface height *h*(*x, y*): $h \left(x, y\right) = \frac{λ ϕ \left(x, y\right)}{4 π}$ , wherein x and y represent two-dimensional spatial coordinates on the sample's surface or in the measurement plane, where the wavefront phase was reconstructed.

For example, a maximum warpage *Wₘₐₓ*(*x, y*) across the entire surface, i.e. across the entirety of the illuminated surface, of the sample or across the surface area of interest can then, for example, be obtained by calculating the difference between the maximum and minimum values *h*(*x, y*) over the area of interest, e.g. the sample surface: ${W}_{max} = {h}_{max} \left(surface\right) - {h}_{min} \left(surface\right)$

If both surfaces of the sample are measured, e.g. by flipping the sample or by using two optical apparatuses or by moving the optical apparatus to probe also the other surface of the sample, then also the total thickness variation *Δhₜₒₜₐₗ* or TTV can be measured using the difference between the maximum thickness *hₘₐₓ*(sample) and minimum thickness *hₘᵢₙ*(sample) across the whole sample, i.e.: ${h}_{total} = {h}_{max} \left(sample\right) - {h}_{min} \left(sample\right)$

Alternatively or in addition, statistical measures such as root mean square (RMS) height variation may be applied.

The exemplary apparatus described herein can, inter alia, measure surface height variations with a precision of 2 nm RMS or better.

The light modification element of the above and herein exemplary described optical apparatus may for example remove or attenuate at least 50% of any non-specular components of the light reflected from a/the surface of the illuminated sample.

The light modification element can be a field stop or an apodizer, in particular a radial apodizer.

Herein, an apodizer is to be understood as an optical element, in particular as an optical thin element, whose transmissivity changes across its spatial extension.

Herein, optical thin is to be understood as meaning that the physical thickness of the apodizer is small compared to the wavelength of light or as meaning that its optical path length is negligible relative to the curvature radii of the apodizer or other dimensions involved in the optical apparatus.

In other words, the light is assumed to experience the optical element's effect as localized at a plane.

A radial apodizer is herein to be understood as an apodizer in which the transmission or transmissivity changes only in the radial direction of the apodizer. Stated differently, a radial apodizer can be understood as an optical thin element with a transmissivity that is a function of the radius.

The field stop or apodizer can be arranged or positioned such that the optical axis of the optical apparatus crosses the center of the field stop or apodizer and the radius of the field stop or apodizer can be measured along an axis perpendicular to the optical axis of the optical apparatus.

The possible implementations of the light modification element as a field stop or apodizer allows an efficient attenuation or removal of at least part of the unwanted non-specular components of the light reflected from the surface of the illuminated sample.

In particular, using a radial apodizer provides an efficient means of attenuating unwanted scattered light, such that the further the reflected light deviates from the specular component, the greater the attenuation.

Unwanted scattered light detrimentally affects the accuracy of the metrology of reflective samples when using wavefront phase reconstructions techniques, as can be understood as follows.

To be able to perform precise wavefront phase reconstructions, a good coherence of the optical system or apparatus is required, i.e. the path of any light ray must be traceable and unambiguous.

Any effect that makes the path of the light rays non back-traceable negatively impacts the performance of wavefront phase reconstructions techniques, like wavefront phase imaging techniques.

The scattering of reflective surfaces behaves in a non-traceable way and therefore degrades the performance of current metrology techniques.

The above and herein exemplary described means for probing a reflective sample addresses this problem by removing or attenuating at least part of the unwanted scattered light reflected from a surface of the illuminated sample.

The light modification element, e.g. the field stop or the apodizer, can be arranged in a pupil plane of the apparatus, in particular in an exit pupil plane of the apparatus. Stated differently, said pupil plane, e.g. said exit pupil plane, can refer to a pupil plane, e.g. an exit pupil plane, that lies between the sample and the at least one image sensor of the above and herein exemplary described optical apparatus.

Herein, the term exit pupil plane can be understood as referring to the optical plane of the image of the aperture stop formed by the optics behind it. Using the propagation direction of the light reflected from the surface of the illuminated sample as reference, an exit pupil plane of the herein exemplary described optical apparatus can be understood as a pupil plane through which light reflected from the surface of the sample passes towards the at least one image sensor.

It has been surprisingly found from internal tests, that this can optimize, in particular, can maximize, the effect of the light modification element of removing or attenuating at least part of any non-specular components of the light reflected from a surface of the illuminated sample.

When the light modification element is exemplary implemented as a field stop, said field stop may have a circular or elliptical aperture. For example, in case the sample is a bowed wafer, the aperture may preferably be circular and in case the sample is a saddle shaped wafer, the aperture may preferably be elliptical. The maximum radial size of the aperture of said exemplary field stop may be in the range of a few mm, preferably around 1 mm.

Furthermore, it has been surprisingly found from internal tests that implementing the light modification element as an apodizer, in particular implementing the light modification element as a radial apodizer placed in a pupil plane of the apparatus, in particular in an/the exit pupil plane of the apparatus, the removal or rejection or attenuation of at least part of any non-specular components of the light reflected from the surface of the illuminated sample is independent from the slope of the sample with respect to the optical axis of the apparatus, e.g. independent from the slope of a longitudinal axis of the sample with respect to the optical axis of the apparatus.

This allows obtaining accurate metrology results even if the sample is misaligned with respect to the optical axis of the apparatus.

It is further conceivable that, when implementing the light modification element as an apodizer, in particular implementing the light modification element as a radial apodizer, it can also be placed close to a pupil plane of the apparatus.

As used herein and in the following, the expressions 'close to' or 'near to' an optical element or optical plane can be understood as denoting a location along the optical axis of the optical apparatus that is directly adjacent to the referenced element or plane, with no other optical component interposed apart from any minimal spacing required, for example, for mounting or sealing purposes.

In the above and herein exemplary described optical apparatus, the at least one light emitting source can be positioned offset from the optical axis of the apparatus.

This can inter alia allow the realization of a more compact design for the optical apparatus.

Furthermore, the at least one light emitting source can be a collimated light source.

In particular, the at least one light emitting source can be a collimated light source that can emit a light beam with small or zero wavefront phase errors, e.g. with wavefront phase errors below λ/10 or below λ/20, with λ being the peak or center wavelength of the light emitting source.

Herein, a collimated light source may, for example, refer to light source emitting a collimated light beam having a full-angle divergence not exceeding 5 mrad.

It is also possible and sufficient the at least one light emitting source can be a collimated light source with a stable wavefront phase error over time, such that it can be determined and can be compensated for in the analysis results of the sample.

In particular, the at least one light emitting source can be a laser or a light-emitting diodes (LED), e.g. an LED with a collimating lens, or an incandescent light source, e.g. incandescent light globe in combination with a condensor lens and a pinhole. It is also conceivable that other light sources can be used, provided they are configured for emitting spatially coherent light.

Stated differently, temporal coherence or longitudinal coherence of the light emitted by the at least one light emitting source is not required, only spatial coherence.

The above and herein exemplary described optical apparatus may further comprise a beam splitter and two optical relays, a first optical relay and a second optical relay.

Said exemplary beam splitter can be a 45° beam splitter. However, other beam splitters with different angle setups can be used as well.

The beam splitter can be placed between the first optical relay and the second optical relay, and the beam splitter and the two optical relays can be arranged along the optical axis of the apparatus.

The beam splitter can be configured for directing light from the at least one light emitting source to the second optical relay for illuminating the surface of the sample.

Furthermore, the beam splitter can be configured to let light reflected from the illuminated sample surface pass through to the at least one image sensor.

In particular, the beam splitter can be configured for receiving the light reflected from the surface of the illuminated sample via the second optical relay and directing the light reflected from the surface of the illuminated sample to the first optical relay for directing the light reflected from the surface of the illuminated sample onto the at least one image sensor.

The possible first optical relay and the possible second optical relay can be Kepler-type or Galilei -type relays optical relays. A Kepler-type optical relay may be preferred since it can be more cost-effective and easier to align than a Galilei-type optical relay.

Furthermore, the possible first optical relay and the possible second optical relay can be implemented using lenses and/or mirrors.

For example, in case of using Kepler-type relays, each of said possible optical relays can comprise a pair of lenses, in particular a pair of positive lenses.

The possible exemplary second optical relay may comprise two positive lenses, a first lens and a second lens, wherein the second lens is arranged closer to the optical plane containing the surface of the illuminated sample.

The two lenses of the second optical relay are arranged such that the total optical power of the lens arrangement is 0 (zero). Stated differently, the two lenses form an afocal system, i.e. the second optical relay is an afocal optical relay.

Furthermore, the distance between the principal plane of the second lens of the second optical relay and the plane containing the surface of the illuminated sample can be the focal length of the second lens and the distance between the principal plane of the first lens and the plane into which the surface of the illuminated sample is imaged can be the focal length of the first lens.

In other words, the possible exemplary second optical relay can be realized as a 4F optical relay.

The focal length of the second lens of the second optical relay can be larger than the focal length of the first lens of the second optical relay.

The above exemplary described possible second optical relay allows to translate and rescale or re-image the optical plane containing the surface of the illuminated sample to a smaller optical plane.

Stated differently, the possible exemplary second optical relay can translate and rescale the optical plane of the sample space, i.e. the plane containing the surface of the illuminated sample, to the smaller optical plane of the sensor space, i.e. the size or the field of view of the at least one image sensor.

This facilitates the realization of a more compact optical apparatus for probing reflective samples and enables the use of a wide variety of image sensor types and sizes, which can also contribute to reducing manufacturing costs.

The possible optional first optical relay, which can further direct the light reflected from the surface of the illuminated sample after passing through the beam splitter onto the at least one image sensor, can also be an afocal system.

It is emphasized, that this optional first optical relay can be omitted entirely from the apparatus, i.e. after having passed the beam splitter, the light reflected from the surface of the illuminated sample can be directed directly onto the at least one image sensor, without the need for any further optical relay. In this exemplary single optical relay configuration, the above mentioned second optical relay is then the only optical relay present in the apparatus.

In any case, the at least one light modification element can, for example, be arranged between the beam splitter and the at least one image sensor, preferably at or near the exit pupil plane of the second optical relay, i.e. preferably at or near the exit pupil plane of the optical relay that is configured for directing the light reflected from the surface of the illuminated sample to the beam splitter.

The optional first optical relay can comprise two positive lenses having the same focal length.

In particular, the first optical relay can be a 4F relay with two positive lenses having the same focal length, i.e. the first optical relay can be configured for relaying the image of the surface of the illuminated sample without changing the scale of the image of the surface of the illuminated sample from the second optical relay.

Stated differently the first optical relay can provide unity (1:1) magnification, thereby preserving the scale of the image of the surface of the illuminated sample from the second optical relay.

The above-described configurations for the possible first optical relay and the possible second optical relay are exemplary only, i.e. other optical relay types can be implemented as well. In particular optical relays with other magnification ratios can also be used.

The above and herein exemplary at least one light modification element may be arranged between said two possible optical relays. For example, the at least one light modification element may be arranged between the above-described beam splitter that is configured for directing light from the at least one light emitting source to the second optical relay for illuminating the surface of the sample and the first optical relay.

More specifically, the at least one light modification element may be arranged at the exit pupil plane of the second optical relay, that forms an/the image of the sample, wherein said image then can be relayed by the first optical relay to the image sensor. For example, when the at least one light modification element is implemented as an apodizer, in particular as a radial apodizer, it may be arranged at or near the exit pupil plane of the second optical relay.

It is also conceivable that the at least one light modification element is arranged between the lenses of the above exemplary described second optical relay. For example, when the at least one light modification element is implemented as a field stop, it may be arranged at or near the focal plane of the second optical relay.

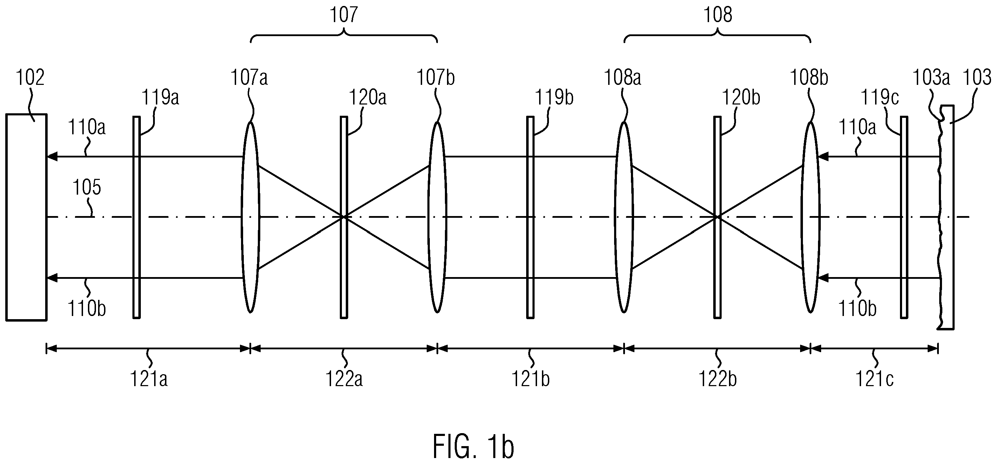

An overview of exemplary possible arrangements of the at least one light modification element along the optical axis of a herein exemplary described apparatus with respect to said two possible optical relays is provided in **Fig.1b****.**

The at least one image sensor can be configured to be movable, in particular movable along the optical axis of the apparatus for being positioned at different optical distances with respect to the sample, i.e. with respect to the illuminated surface of the illuminated sample.

For example, the at least one image sensor could be mounted onto a movable stage, that can be a single-axis translation stage for moving the at least one image sensor to positions along the optical axis of the apparatus with different optical distances with respect to the sample.

In addition or alternatively, it is also possible that the at least one image sensor comprises a variable focus lens that can enable the at least one image sensor to obtain images of the sample at different optical distances along the optical axis of the apparatus.

In addition or alternatively, it is also possible that the apparatus comprises at least two image sensors, wherein the at least two image sensors are arranged at different optical distances with respect to the sample.

For example, the apparatus may comprise at least two image sensors, wherein said at least two image sensors can be in optical communication with a beam splitter, and wherein the beam splitter can be configured for directing the light reflected off the sample surface towards the at least two image sensors.

This optional beam splitter can be different from the previously exemplary described beam splitter that can be placed between the optional first optical relay and the optional second optical relay.

The beam splitter can be a 45° beam splitter. However, other beam splitters with different angle setups can be used as well.

Said exemplary at least two image sensors can be arranged at different optical distances with respect to the sample.

Furthermore, said exemplary at least two image sensors can be configured for a simultaneous acquisition of images of the sample.

Stated differently said exemplary at least two image sensors can be synchronized for taking an image of the sample at the same time.

Also said exemplary at least two image sensors can be twin sensors, i.e. they can be built identically and can have the same sensor size and same sensor characteristics within manufacturing tolerances.

It is further conceivable that other optical elements, i.e. optical elements other than beam splitters, can be used for directing light reflected off the sample towards the at least two image sensors. For example, a movable optical element, e.g. a rotating or swiveling optical element, e.g. a rotating or swiveling mirror, that selectively can direct light reflected off the sample towards one or the other of the at least two image sensors.

The above and herein described exemplary apparatus may further comprise at least one sample holder that can be configured to hold the sample to be probed in a horizontal or in a vertical orientation or in any other desired orientation.

Furthermore, said exemplary at least one sample holder may be configured to flip or rotate or move the sample to be probed such that different surfaces of the sample can be probed by the apparatus.

An exemplary method for probing a reflective sample, in particular a semiconductor wafer, with an optical apparatus as exemplary described above, can comprise one, some or all of the following steps:
- illuminating the sample with the at least one light emitting source;
- capturing, with the at least one image sensor, at least two images of the sample at different optical distances along the optical axis of the apparatus;
- reconstructing from the captured at least two images at least one two-dimensional wavefront phase of the light reflected by the surface of the sample and that has passed through the at least one light modification element of the apparatus, wherein said at least one light modification element is configured for removing or attenuating at least part of any non-specular components of the light reflected from a surface of the illuminated sample; and
- extracting information on at least one characteristic of the sample from the reconstructed at least one two-dimensional wavefront phase.

As previously described further above, the step of reconstructing the at least one two-dimensional wavefront phase of the light reflected by the surface of the sample from the captured at least two images can be carried out using wavefront phase imaging techniques.

As equally previously described further above, the step of extracting information on at least one characteristic of the sample from the reconstructed at least one two-dimensional wavefront phase can comprise extracting information on at least one of the following characteristics of the sample: size or geometry or shape of sample, size or geometry or shape of surface features of sample, surface height variations of the sample, e.g. total thickness variation or local thickness variation of the sample surface.

All of the above exemplary described steps can be assisted by or controlled by or carried out by or implemented with the support of the previously described exemplary computing system(s). For example, said steps can be assisted by or controlled by or carried out by a computing system which may be part of the optical apparatus or that may be an external computing system in communication with optical apparatus.

The herein described means for probing a reflective sample provides inter alia at least the following advantages over current systems and methods.
- Avoiding or reducing the significant negative impact of scattered light from the illuminated surface of the sample on the metrology measurements, thereby obtaining a higher accuracy in determining surface topology characteristics of a sample.
- No need to perform point by point raster scans with intricate laser device setups.
- Minimal number of optical elements, thereby easier to setup and more robust, leading to less downtimes and more operational efficiency.
- Precise high-speed measurements of the surface characteristics of multiple sides of a sample.
- Suitable for inline measurements of samples in a manufacturing line, in particular for semiconductor wafer samples.

The following figures serve to illustrate the following aspects for a better understanding of some of the features of the claimed subject-matter and of the features exemplary described above.
**Fig.1a****:** Exemplary optical apparatus for probing a reflective sample
**Fig.1b****:** Exemplary possible positions for the placement of the light modification element along the optical axis of the optical apparatus of **Fig.1a**
**Fig.2a****:** Example of light reflected by the surface of a sample
**Fig.2b****:** Example of optical relay receiving light reflected by the surface of a sample
**Fig.3a****:** Example of effect of an exemplary field stop of the reflected light
**Fig.3b****:** Example of optical relay with exemplary field stop
**Fig.4a****:** Example of a radial apodizer
**Fig.4b****:** Exemplary transmissivity function of a radial apodizer

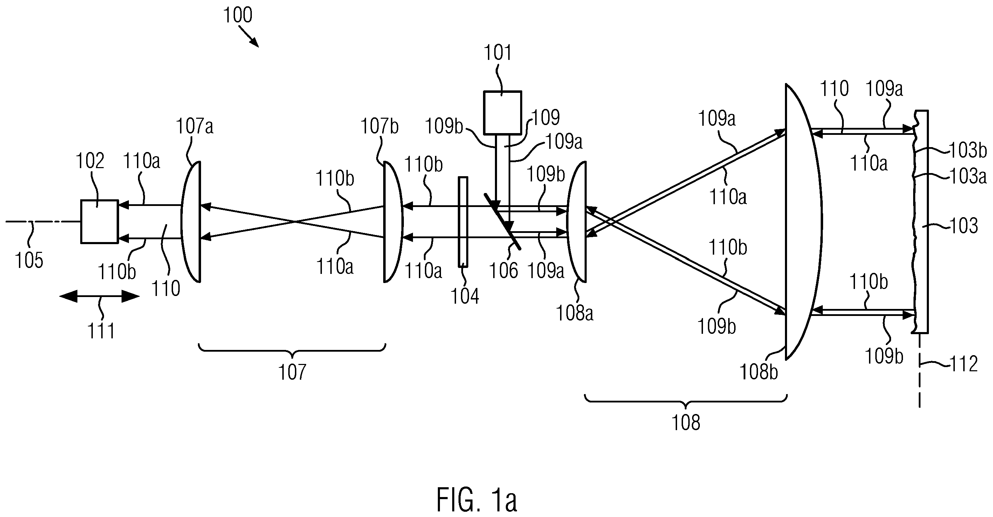

**Fig. 1a** shows an exemplary optical apparatus 100 for probing a reflective sample 103 that can have any of the above exemplary described features. In the shown example, the apparatus comprises a light emitting source 101 and an image sensor 102 and a light modification element 104, e.g. a field stop or an apodizer, arranged between the sample 103 and the image sensor 102 along the exemplary optical axis 105.

In this example, the optical apparatus 100 has an exemplary coaxial illumination setup, wherein the light 109 from the light source 101, which is arranged with an offset from the optical axis 105, is directed by the exemplary beam splitter 106 towards the surface 103a of the sample 103. The surface 103a of the sample 103 is exemplary depicted as a non-flat surface with exemplary surface irregularities 103b.

The exemplary optical apparatus 100 further comprises two exemplary optical relays 107, 108 that each can comprise two positive lenses, i.e. the two exemplary optical relays 107, 108 can be implemented as Kepler-type optical relays. However, as previously indicated, it is emphasized again, that the first optical relay 107 and the second optical relay 108 can be implemented not only as Kepler-type optical relays but also as Galilei-type relays. Furthermore, it is noted that the first optical relay 107 and the second optical relay 108 can also be implemented using mirrors instead of lenses.

The exemplary first optical relay 107 comprises the exemplary lenses 107a, 107b and the exemplary second optical relay 108 comprises the exemplary lenses 108a, 108b.

The first optical relay 107 can be a 4F relay with two positive lenses 107a, 107b having the same focal length and can provide unity (1:1) magnification.

The second optical relay 108 can be a 4F relay with two positive lenses 108a, 108b having different focal lengths. In the example shown, the focal length of lens 108b can be larger than the focal length of lens 108a. This allows to translate and rescale or re-image the optical plane containing the surface 103a of the illuminated sample 103 to a smaller optical plane.

However, as previously indicated, first and second optical relays with other magnification ratios, i.e. with other different focal lengths, can also be used.

Said beam splitter 106 is exemplary placed between the first optical relay 107 and the second optical relay 108 and is configured for directing light 109 from the light emitting source to the second optical relay for illuminating the surface 103a of the sample 103.

The exemplary beam splitter 106 is further configured receiving the light 110, 110a,110b reflected from the surface 103a of the illuminated sample 103 via the second optical relay 108 and directing the light 110, 110a, 110b reflected from the surface 103a of the illuminated sample 103 to the first optical relay 107 for directing the light 110, 110a,110b reflected from the surface 103a of the illuminated sample 103 onto the image sensor 102.

Herein, the reference signs 109a, 109b exemplary mark limiting rays of the light 109 emitted by light emitting source 101 for illuminating the surface 103a of the sample 103 and the reference signs 110a, 110b exemplary mark limiting rays of the light 110 reflected from the surface 103a of the illuminated sample 103.

For completeness, it is noted that reference signs 110, 110a, 110b exemplary mark only the specular components of the light reflected from the surface 103a of the illuminated sample 103.

The exemplary image sensor 102 can be configured for capturing two images of the sample 103, i.e. the surface of 103a of the sample, at different optical distances along the optical axis 105 of the apparatus 100.

For example, the image sensor 103 can be movable along the optical axis 105 as indicated by arrows 111.

The reference sign 112 exemplary marks an exemplary longitudinal axis of the sample 103.

In the show example, the exemplary longitudinal axis of the sample 103 is oriented perpendicular to the optical axis 105. In other words, the slope between the sample 103 and the optical axis 105 is zero.

As exemplary described further above, the light modification element 104 can be configured for removing or attenuating at least part of any non-specular components of the light 110 reflected from the surface 103a of the illuminated sample 103.

The placement of the light modification element 104 between the two optical relays 107, 108, and in particular, the placement between the beam splitter 106 and the first optical array 107 is exemplary only. Further exemplary placement positions are illustrated in **Fig.1b****.**

Moreover, the first optical relay 107 is entirely optional and can be omitted, i.e. the reflected light 110a, 110b from the surface 103a of the sample 103 may propagate freely and directly from the light modification element 104 onto the image sensor 103.

As also exemplary described further above, the apparatus 100 can further be configured for reconstructing at least one two-dimensional wavefront phase of the light reflected by the surface 103a of the sample 103 and that has passed through said light modification element 104 from at least two images captured by image sensor 103 at different optical distances along the optical axis 105 of the apparatus 100.

Furthermore, as also exemplary described further above, the apparatus 100 can be configured for extracting information on at least one characteristic of the sample 103, i.e. the surface 103a of the sample 103, from the reconstructed at least one two-dimensional wavefront phase.

The apparatus 100 may comprise or be in communication with a computing system (not shown), which can aid in, assist with or carry out the steps required for reconstructing at least one two-dimensional wavefront phase of the light 110 reflected by the surface 103a of the sample 103 and that has passed through the light modification element 104. In other words, the computing system (not shown) can aid in carrying out wavefront phase imaging techniques.

Said possible computing system (not shown) can further aid in, assist with or carry out the steps required for extracting information on at least one characteristic of the sample 103, i.e. the surface 103a of the sample 103, from the reconstructed at least one two-dimensional wavefront phase.

Fig. 1b exemplary shows possible positions and possible ranges 121a, 121b, 121c, 122a, 122b of positions for the placement of the light modification element along the optical axis 105 of the optical apparatus 100 of **Fig.1a****.**

For clarity and to avoid unnecessary clutter, the light source 101, the beam splitter 106 and light modification element 104 are not shown.

However, **Fig.1b** shows the exemplary first optical relay 107 comprising the exemplary pair of lenses 107a, 107b and the exemplary second optical relay 108 comprising the exemplary pair of lenses 108a, 108b.

For completeness, it is noted that the illustrated shapes of the lenses 107a, 107b, 108a, 108b is exemplary and schematic only, i.e. the lenses 107a, 107b, 108a, 108b of **Fig.1b** can be identical or similar to the lenses of **Fig.1a****.** As previously indicated, instead of lenses, the optical relays may also be realized using mirrors and can be realized not only as Kepler-type optical relays but also as Galilei-type optical relays.

**Fig.1b** focusses on exemplary illustrating the path of the light reflected from the illuminated surface 103a of the sample 103, as indicated by the exemplary limiting rays 110a, 110b that start from the illuminated surface 103a of the sample 103 and propagate towards the exemplary image sensor 102.

Adopting said propagation direction of the light reflected from the illuminated surface 103a of the sample 103 as reference direction, the reference numeral 119b denotes an exemplary exit pupil plane of the second optical rely 108 and the reference numeral 119a denotes an exemplary exit pupil plane of the first optical rely 107. Reference numeral 119c then denotes an exemplary entry pupil plane of the second optical relay for the light reflected from the illuminated surface 103a of the sample 103.

Reference numeral 120a then denotes an exemplary focal plane of the exemplary first optical relay 107 and reference numeral 120b denotes an exemplary focal plane of the exemplary first optical relay 108.

A possible light modification element (not shown), e.g. light modification element 104 from **Fig.1a****,** when, for example implemented as apodizer, may be arranged between the exemplary image sensor 102 and the optical array 107, i.e. at any position between the exemplary image sensor 102 and the lens 107a of optical array 107, as indicated by the positional range 121a.

For example, the light modification element may be arranged preferably at or near the pupil plane 119a, which represents the exit pupil plane of the optical array 107 for light 110a, 110b reflected from the surface 103a of the sample 103.

Alternatively or in addition, a possible light modification element (not shown), e.g. light modification element 104 from **Fig.1a****,** when, for example implemented as apodizer, may be arranged between the first optical array 107 and the second optical array 108, i.e. at any position between the lens 107b of the first optical array 107 and the lens 108a of the second optical array 108, as indicated by the positional range 121b.

More specifically, taking into account the presence of the possible beam splitter 106 from **Fig.1a** that can be arranged between the two optical relays 107, 108, the light modification element can be arranged between the lens 107b of optical relay 107 and the possible beam splitter (not shown).

For example, the light modification element may be arranged preferably at or near the pupil plane 119b, which represents the exit pupil plane of the optical array 108 for light 110a, 110b reflected from the surface 103a of the sample 103. Said pupil plane 119b preferably lies between lens 107b of the optical relay 107 and the possible beam splitter (not shown here but in **Fig.1a****).**

Alternatively or in addition, a possible light modification element (not shown), e.g. light modification element 104 from Fig.1a, when, for example implemented as apodizer, may be arranged between the second optical array 108 and the surface 103a of the sample 103, i.e. at any position between the lens 108b of the second optical array 108 and the surface 103a of the sample 103, as indicated by the positional range 121c.

Alternatively or in addition, a possible light modification element (not shown), e.g. the light modification element 104 from **Fig.1a****,** when, for example implemented as a field stop, may be arranged inside the first optical relay 107, i.e. between lens 107a and lens 107b, preferably at or near the focal plane 120a of the first optical relay 107. The reference numeral 122a exemplary indicates a possible positional range for placing said possible light modification element.

Alternatively or in addition, a possible light modification element (not shown), e.g. the light modification element 104 from Fig.1a, when, for example implemented as a field stop, may be arranged inside the second optical relay 108, i.e. between lens 108a and lens 108b, preferably at or near the focal plane 120b of the first optical relay 108. The reference numeral 122b exemplary indicates a possible positional range for placing said possible light modification element.

For completeness, it is noted that the positions of the entry and exit pupils along the optical axis 105 of any herein exemplary described apparatus and for any selected optical relay may be derived with established optical-design techniques, e.g. using ray-tracing, and that possible lenses of the optical apparatus can be modeled using the thin lens approximation without departing from the scope of the present disclosure.

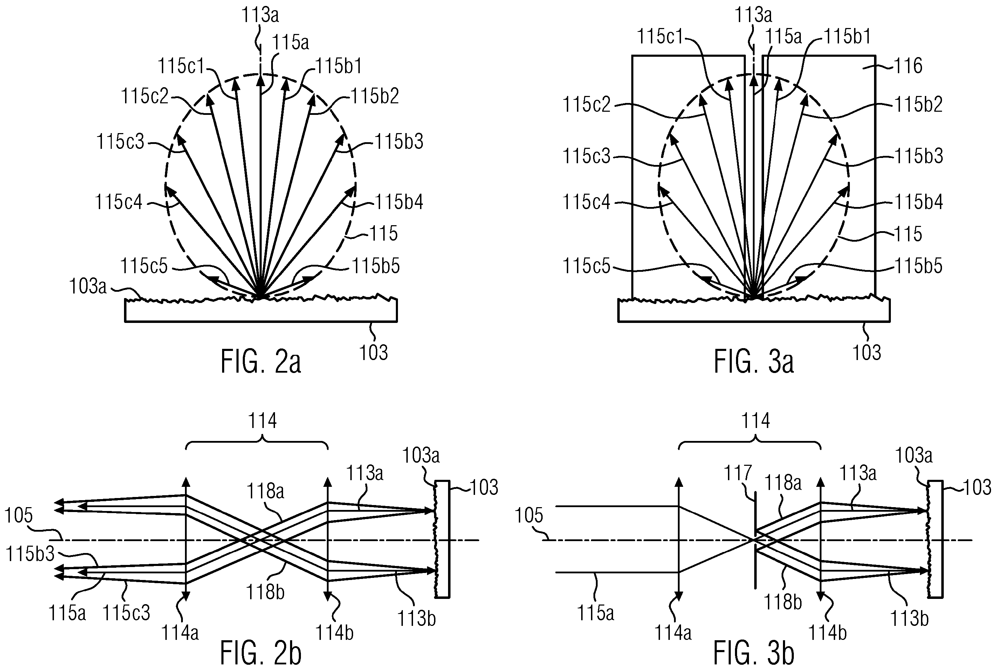

**Fig.2a** and **Fig.2b** exemplary illustrate the possible exemplary propagation of backscattered light from the surface 103a of a sample 103 through an exemplary optical relay 114. The sample 103 can be identical or similar to the sample 103 of **Fig.1****.**

**Fig. 2a** exemplary shows an exemplary incident light beam 113a and an exemplary possible range 115 of reflected beams 115a, 115b1... b5, 115c1...c5 that could originate from the backscattering of the light beam 113a from the surface 103a of the sample 103, for example, due to undesired irregularities in the topology of the surface 103a of the sample 103.

The exemplary possible specular component of the possible fan 115 of reflected beams 115a, 115b1...b5, 115c1...c5 is denoted with the reference sign 115a, while the exemplary non-specular components of the backscattered light that is reflected from the surface 103a of the sample 103 are designated with reference signs 115b1...b5, 115c1...c5.

**Fig. 2b** exemplary shows an exemplary way of the incident light for illuminating the surface 103a of the sample 103 and an exemplary way of the reflected light from the surface 103a of the sample 103 through an exemplary optical relay 114, which can comprise two positive lenses 114a, 114b.

Said optical relay can be an afocal optical relay, in particular an afocal 4f optical relay.

Herein, the incident light beam or incident light ray 113a shown in **Fig.2a** is illustrated as exemplary illuminating a part of the surface 103a of the sample 103 that lies above the exemplary optical axis 105, which can be similar or identical to the optical axis 105 of **Fig.1a****.**

As illustrated, the exemplary optical relay 114 relays light 118a backscattered from the surface 103a of the sample 103 that lies above the exemplary optical axis 105 toward an image sensor (not shown), wherein said relayed backscattered light can comprise the specular component 115a and at least part or all of the non-specular components 115b1...b5, 115c1...c5.

In the example shown, only non-specular components 115b1, 115b2, 115b3, 115c1, 115c2, 115c3 are relayed, since the non-specular components 115b4, 115b5, 115c4, 115c5 do not reach the lens 114b of the optical relay 114.

The reference sign 113b exemplary marks an incident light beam or incident light ray that illuminates a part of the surface 103a of the sample 103 that lies below the exemplary optical axis 105 and the reference sign 118b marks the exemplary possible range of light backscattered from said part of the surface 103a of the sample. Similar to the backscattered light 118a, the backscattered light 118b can also be relayed by the optical relay 114 towards said image sensor (not shown) and similar to the backscattered light 118a, the backscattered light 118b comprises both specular and non-specular components.

In other words, as illustrated in **Fig.2b****,** in addition to the specular components, at least part or all of the non-specular components of the light 118a, 118b backscattered from the surface 103a of the sample 103 would reach an image sensor (not sensor), which would negatively impact the accuracy with which a metrology of the sample surface 103a could be performed.

**Fig.3a** and **Fig.3b** exemplary illustrate the effect of an exemplary light modification element 117 in the optical path of the backscattered light 118a, 118b of **Fig. 2b****,** wherein the light modification element 117 is arranged along the optical axis 105 of the optical relay 114.

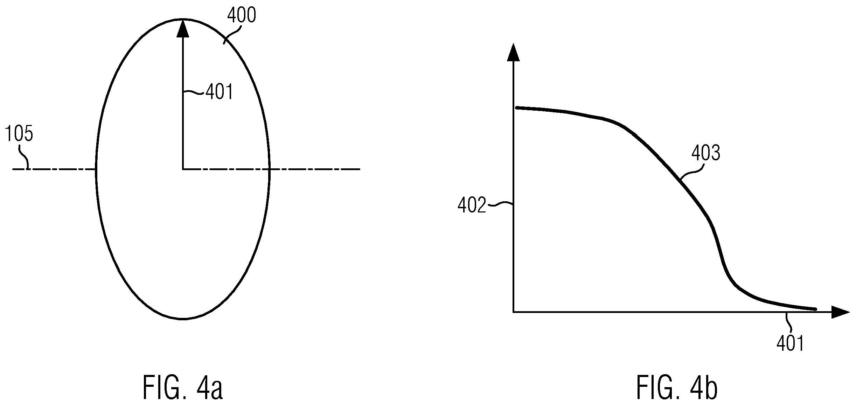

In the example shown, the light modification element 117 is exemplary arranged between the two lenses 114a, 114b of the optical relay 114 and the light modification element 117 is exemplary implemented as a field stop. However, it also possible that the light modification element 117 that is exemplary arranged between the two lenses 114a, 114b of the optical relay 114 can be implemented as an apodizer, in particular as a radial apodizer, such as the apodizer 400 described in **Fig. 4a** and **Fig. 4b****.**

The position of the light modification element 117 can be at or near the backfocal plane of the lens 114b of the optical relay 114.

As can be seen in **Fig.3a** the field stop blocks all non-specular components 115b1... b5, 115c1...c5 of the light reflected from the surface 103a of the sample 103 and only allows the specular component 115a of the reflection of the incident light beam 113a to pass.

The reference sign 116 exemplary marks the fraction of non-specular components 115b1... b5, 115c1...c5 of the light reflected from the surface 103a of the sample 103 that is blocked or attenuated by the field stop 117.

In the optical path of **Fig.3b** it can be seen that the exemplary field stop 117 allows only the specular components of the light 118a, 118b backscattered from the surface 103a of the sample 103 from incident light beams 113a, 113b to pass through. For completeness, it is noted that in the **Fig.3b** only the specular component 115a for the backscattered light 118a from incident light beam 113a is marked with the reference sign 115a and that the specular component of the backscattered light 108b from incident light beam 113b is shown but not marked with a reference sign. Hence, the optical relay 114 relays only the specular components of light 118a, 118b reflected from the surface 103a of the sample 103 to an/the image sensor (not shown).

**Fig.4a** and **Fig.4b** exemplary show possible characteristics of a light modification element 117 that is exemplary implemented as an apodizer 400, in particular as a radial apodizer.

**Fig.4a** exemplary shows a disc like radial apodizer 400 that is optically thin and which transmissivity is a function of the radial coordinate 401, i.e. the effect of modifying the light, attenuating the light, depends solely on the distance from the optical axis 105, which passes through the center of the apodizer 400. The optical axis 105 can be identical to the optical axis as shown in Fig.1a, Fig.1b, **Fig. 2b** and **Fig. 3b****.**

Since the transmission function or transmissivity function *T(r)* is only a function of the radial coordinate *r*, 401, the light modification effect of the apodizer, e.g. the attenuation of the amplitude of the light, is uniform in all angular directions.

**Fig.4b** exemplary shows an exemplary transmission function or transmissivity function *T(r),* 403, of the apodizer 400 of **Fig.4a****,** wherein in the shown coordinate system, the abscissa axis represents the radial coordinate 401 and the ordinate axis 402 represents the amplitude of the transmission function or transmissivity function *T(r),* 403*.*

The origin of the abscissa axis is zero, i.e. the center of the apodizer at radius zero.

As can be seen, the transmission or transmissivity of the apodizer 400 is highest at radius zero and then smoothly and gradually drops with increasing radius.

Stated differently, the radial apodizer can be implemented as a continuous radial apodizer. The shown transmission function or transmissivity function *T(r),* 403 is exemplary only. It is also conceivable, that instead of implementing the light modification element as a continuous radial apodizer, which provides a continuous gradual attenuation from the center to the edge of the aperture, i.e. the edge of the apodizer, the radial apodizer may also be implemented as a discrete radial apodizer, having discrete zones, e.g. ring zones, of different transmission values.

Followed by Figs. 1a, 1b, 2a, 2b, 3a, 3b, 4a and 4b, wherein the reference signs denote the following exemplary components and/or aspects and/or exemplary steps.
100 exemplary optical apparatus
101 exemplary light emitting source
102 exemplary image sensor
103 exemplary sample
103a exemplary surface of sample, exemplary surface of sample with surface irregularities
103b exemplary surface irregularities
104 exemplary light modification element, e.g. field stop or an apodizer
105 exemplary optical axis
106 exemplary beam splitter, e.g. 45° beam splitter
107 exemplary first optical relay
107a exemplary (first) lens of first optical relay
107b exemplary (second) lens of first optical relay
108 exemplary second optical relay
108a exemplary (first) lens of second optical relay
108b exemplary (second) lens of second optical relay
109 exemplary light emitted from light emitting source 101, exemplary incident light beam
109a exemplary limiting ray
109b exemplary limiting ray
110 exemplary light reflected from the surface 103a of the sample 103,
   exemplary specular components of light reflected from the surface 103a of the sample 103
110a exemplary limiting ray
110b exemplary limiting ray
111 exemplary direction of possible movement of the image sensor 103 along optical axis 105
112 exemplary longitudinal axis of the sample 103
113a exemplary incident light beam / light ray
113b exemplary incident light beam / light ray
114 exemplary optical relay
114a exemplary (first) lens of optical relay
114b exemplary (second) lens of optical relay
115 exemplary fan or bundle of possible light rays scattered from the surface 103a of sample 103
115a exemplary specular component of light reflected from surface 103a of the sample 103
115b1,115b2,115b3,115b4,115b5 exemplary non-specular component of light reflected from the surface 103a of the sample 103
115c1,115c2,115c3,115c4,115c5 exemplary non-specular components of light reflected from the surface 103a of the sample 103
116 exemplary fraction of non-specular components of light reflected from the surface 103a of the sample 103 removed or attenuated by the exemplary light modification element 117, exemplary region, where light reflected from the surface 103a of the sample 103 is blocked or attenuated
117 exemplary light modification element 117, exemplary field stop
118a exemplary scattered light from the surface 103a of the sample 103 and relayed by optical relay
118b exemplary scattered light from the surface 103a of the sample 103 and relayed by optical relay
119a exemplary pupil plane, exemplary exit pupil plane of first optical relay 107 for light 110a, 110b reflected from the surface 103a of sample 103
119b exemplary pupil plane, exemplary exit pupil plane of second optical relay 107 for light 110a, 110b reflected from the surface 103a of sample 103
119c exemplary pupil plane, exemplary entry pupil plane of second optical relay 107 for light 110a, 110b reflected from the surface 103a of sample 103
120a exemplary focal plane of first optical relay 107
120b exemplary focal plane of second optical relay 108
121a exemplary range of possible positions along optical axis 105 for possible light modification element, in particular for possible light modification element implemented as an apodizer, e.g. as an radial apodizer
121b exemplary range of possible positions along optical axis 105 for possible light modification element, in particular for possible light modification element implemented as an apodizer, e.g. as an radial apodizer
121c exemplary range of possible positions along optical axis 105 for possible light modification element, in particular for possible light modification element implemented as an apodizer, e.g. as an radial apodizer
122a exemplary range of possible positions along optical axis 105 for possible light modification element, in particular for possible light modification element implemented as a field stop
122b exemplary range of possible positions along optical axis 105 for possible light modification element, in particular for possible light modification element implemented as a field stop
400 exemplary apodizer, e.g. radial apodizer
401 exemplary radial coordinate, exemplary abscissa axis
402 exemplary ordinate axis, exemplary amplitude of transmission function or transmissivity function *T(r)*
403 exemplary transmission function or transmissivity function *T(r)*

## Claims

1. Optical apparatus (100) for probing a reflective sample (103), comprising:
at least one light emitting source (101) configured for illuminating the sample (103);
at least one image sensor (102) configured to capture images of the illuminated sample (103);
at least one light modification element (104) arranged between the sample (103) and the at least one image sensor (102), wherein said at least one light modification element (104) is configured for removing or attenuating at least part of any non-specular components of the light reflected from a surface (103a) of the illuminated sample (103);
wherein the apparatus (100) is configured for capturing, with the at least one image sensor (102), at least two images of the sample at different optical distances along the optical axis (105) of the apparatus (100);
and wherein the apparatus (100) is configured for reconstructing at least one two-dimensional wavefront phase of the light reflected by the surface (103a) of the sample (103) and that has passed through said at least one light modification element (104) from the captured at least two images;
and wherein the apparatus (104) is further configured for extracting information on at least one characteristic of the sample (103) from the reconstructed at least one two-dimensional wavefront phase.

2. Apparatus (100) according to claim 1, wherein the light modification element (104) is a field stop (117) or an apodizer (400), in particular a radial apodizer.

3. Apparatus (100) according to one of the preceding claims, wherein the light modification element (104) is arranged in a pupil plane of the apparatus (100), in particular in an exit pupil plane of the apparatus (100).

4. Apparatus (100) according to one of the preceding claims, wherein the at least one light emitting source (102) is positioned offset from the optical axis (105) of the apparatus (100).

5. Apparatus (100) according to one of the preceding claims, wherein the at least one light emitting source (102) is a collimated light source.

6. Apparatus (100) according to one of the preceding claims 4 or 5, further comprising a beam splitter (106) and a first optical relay (107) and a second optical relay (108), wherein the beam splitter (106) is placed between the first optical relay (107) and the second optical relay (108), wherein the beam splitter (106) and the two optical relays (107, 108) are arranged along the optical axis (105) of the apparatus (100), and wherein the beam splitter (106) is configured for directing light from the at least one light emitting source (101) to the second optical relay (108) for illuminating the surface (103a) of the sample (103), and wherein the beam splitter (106) is configured for receiving the light reflected from the surface (103a) of the illuminated sample (103) via the second optical relay (108) and directing the light reflected from the surface (103a) of the illuminated sample (103) to the first optical relay (107) for directing the light reflected from the surface (103a) of the illuminated sample (103) onto the at least one image sensor (102), and wherein the at least one light modification element (104) is arranged between the beam splitter (106) and the at least one image sensor (102), preferably at or near the exit pupil plane (119b) of the second optical relay (108);
or an apparatus (100) according to one of the preceding claims 4 or 5, further comprising a beam splitter (106) and one optical relay (108), wherein the beam splitter (106) is placed between the optical relay (108) and the at least one image sensor (102), wherein the beam splitter (106) and the optical relay (108) are arranged along the optical axis (105) of the apparatus (100), and wherein the beam splitter (106) is configured for directing light from the at least one light emitting source (101) to the optical relay (108) for illuminating the surface (103a) of the sample (103), and wherein the beam splitter (106) is configured for receiving the light reflected from the surface (103a) of the illuminated sample (103) via the optical relay (108) and directing the light reflected from the surface (103a) of the illuminated sample (103) onto the at least one image sensor (102), and wherein the at least one light modification element (104) is arranged between the beam splitter (106) and the at least one image sensor (102), preferably at or near the exit pupil plane (119b) of the optical relay (108).

7. Apparatus (100) according to the preceding claim, wherein each optical relay (107, 108) comprises a pair of lenses (107a, 107b, 108a, 108b), in particular a pair of positive lenses.

8. Apparatus (100) according to one of the preceding claims, wherein the extracted information on at least one characteristic of the sample (103) from the reconstructed at least one two-dimensional wavefront phase comprises information on at least one of the following characteristics of the sample (103): size or geometry or shape of sample, size or geometry or shape of surface features of sample, surface height variations of the sample, e.g. total thickness variation or local thickness variation or warpage of the sample surface (103a).

9. Apparatus (100) according to one of the preceding claims, wherein the at least one image sensor (102) is movable, in particular movable along the optical axis (105) of the apparatus (100) for being positioned at different optical distances with respect to the sample (103), and/or wherein the at least one image sensor (102) comprises a variable focus lens, or wherein the apparatus comprises at least two image sensors, wherein the at least two image sensors are arranged at different optical distances with respect to the sample.

10. Apparatus (100) according to one of the preceding claims, comprising a sample holder, wherein the sample holder is configured to flip or rotate or move the sample to be probed such that different surfaces of the sample (103) can be probed by the apparatus (100).

11. Apparatus (100) according to one of the preceding claims, wherein the sample (103) is a semiconductor wafer.

12. Method for probing a reflective sample (103) with an apparatus (100) according to one of the preceding claims, comprising:
illuminating the sample with the at least one light emitting source (101);
capturing, with the at least one image sensor (102), at least two images of the sample (103) at different optical distances along the optical axis (105) of the apparatus (100);
reconstructing from the captured at least two images at least one two-dimensional wavefront phase of the light reflected by the surface (103a) of the sample (103) and that has passed through the at least one light modification element (104) of the apparatus (100), wherein said at least one light modification element (104) is configured for removing or attenuating at least part of any non-specular components of the light reflected from the surface (103a) of the illuminated sample (103); and
extracting information on at least one characteristic of the sample from the reconstructed at least one two-dimensional wavefront phase.

13. Method according to the preceding claim, wherein the sample (103) is a semiconductor wafer.

14. Method according to the preceding claim, wherein the reconstructing of at least one two-dimensional wavefront phase of the light reflected by the surface (103a) of the sample (103) from the captured at least two images is carried out using wavefront phase imaging.

15. Method according to one of the preceding method claims, wherein extracting information on at least one characteristic of the sample from the reconstructed at least one two-dimensional wavefront phase comprises extracting information on at least one of the following characteristics of the sample (103): size or geometry or shape of sample, size or geometry or shape of surface features of sample, surface height variations of the sample, e.g. total thickness variation or local thickness variation of the sample surface (103a).
